# EUROPEAN PATENT APPLICATION

(11) **EP 4 563 813 A1**
(43) Date of publication of application: **04.06.2025**
(21) Application number: 23213216.7
(22) Date of filing: 30.11.2023
(51) Int. Cl.: F03D 13/20

(54) **A BLADE HANDLING ASSEMBLY FOR MOVING A WIND TURBINE BLADE BETWEEN DIFFERENT LOCATIONS**

(71) Applicant: LM Wind Power A/S, 6000 Kolding (DK)
(72) Inventor: JOHNSON, Jonathan, Gaspé, QC G4X 2M1 (CA)
(74) Representative: COPA Copenhagen Patents

(57) **Abstract**

The present invention relates to a blade handling assembly (62) for moving a wind turbine blade (10) between two locations. The blade handling assembly (62) includes at least one blade handling unit (64) comprising a motorized trolley (66) and an interface structure (68) releasably coupled to the motorized trolley (66). The interface structure (68) includes a support member (70) and a receiving member (72), wherein a fixture (74) is arranged on the receiving member (72), the fixture (74) being configured for attachment to the wind turbine blade.

## Description

### Field of the invention

The present invention relates to a blade handling assembly for moving a wind turbine blade between two locations, and to a method of moving a wind turbine blade between two locations.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

Once the blade has been manufactured, it typically has to be moved away from the manufacturing site to an intermediate storage site, such as a site located outside a factory hall. Today, known methods for blade handling and moving over comparatively short distances rely on cranes to transfer the manufactured blade from the manufacturing site to a storage or transfer site. The use of cranes, however, can be quite costly and tedious. Also, due to the size and fragility of these large rotor blades, the blades may be damaged during handling and moving. Such damage may seriously degrade the performance of the blades. Therefore, the blades need to be carefully handled in order to ensure that they are not damaged.

Another challenge is associated with the fact that usually a range of blades of different types and sizes will be produced at a given manufacturing site. Known blade handling methods are sometimes not able to address this situation and/or require substantial modifications when switching between different blade types or sizes.

Hence, there is a demand for making blade handling solutions simpler, safer, cheaper and more efficient.

Thus, it would be desirable to provide a method of handling and/or moving wind turbine blades which reduces the amount of time and cost required for such operation.

It is therefore an object of the invention to obtain a new method and system for handling and moving wind turbine blades, which overcomes or ameliorates at least one of the disadvantages of the prior art or which provides a useful alternative.

Particularly, it is an object of the invention to provide a more flexible blade handling solution that is able to accommodate for different situations, spatial requirements and various blade types and sizes.

### Summary of the invention

The present invention addresses one or more of the above-discussed objects by providing a blade handling assembly for moving a wind turbine blade between two locations, the wind turbine blade having a pressure side, a suction side, a leading edge, and a trailing edge extending between a tip and a root, the blade handling assembly including at least one, preferably two blade handling units each comprising a motorized trolley, an interface structure releasably coupled to the motorized trolley, the interface structure comprising a support member and a receiving member, the support member being releasably attached to the receiving member, a respective fixture arranged on the respective receiving member, the fixture being configured for attachment to the wind turbine blade.

It has been found that this solution is particularly useful for transferring the finished blade from the manufacturing site, such as a factory, over a relatively short distance, e.g. to the outside, such as the yard of the factory. Using the blade handling assembly of the present invention is found to provide a particularly efficient solution for such shortdistance transfers, which is applicable to a wide range of blades of different types and sizes due to the flexibility of the arrangement. Also, as no crane or suspension device is required for the solution of the present invention, the result is an overall more cost-effective and safer blade handling arrangement. It was found that the blade handling assembly of the present invention can be used for blades as long as 107 meters with an approximate root diameter of 6 meters and weighing over 40 metric tons.

The blade handling assembly is preferably suitable for moving a wind turbine blade over a distance of at least 50 meters, such as at least 100 meters. The two locations are preferably a manufacturing site, such as a production hall preferably having a length of at least 250 meters and a width of at least 30 meters, and a storage site, respectively. Typically, the wind turbine blade will be moved along a non-linear path, i.e., a path including one or more curves and/or turns. The turbine blade preferably has a length of at least 30 meters, preferably at least 50 meters, most preferably at least 70 meters.

It is preferred that the blade handling assembly comprises two blade handling units, preferably arranged along the length or longitudinal axis of the blade, wherein a first blade handling unit is configured to support the blade at its root end, and a second blade handling unit is configured to support the blade at an airfoil region of the blade, preferably within a tip region of the blade, i.e., at a longitudinal distance from the tip of the blade of up to 20 meters, preferably up to 15 meters, going into the direction of the blade root. In a preferred embodiment, a first blade handling unit is configured to support the blade at its root end, and a second blade handling unit is configured to support the blade at an airfoil region of the blade which is within an interval of 60-90 meters, preferably 65-85 meters, most preferably 70-80 meters, from the root end when going along the longitudinal axis of the blade. Thus, it is preferred that the distance between the respective fixtures of the two blade handling units, taken along the longitudinal axis of the blade, is 60-90 meters, preferably 65-85 meters, most preferably 70-80 meters.

It is preferred that the blade handling assembly comprises at least two of said blade handling units, preferably with differently shaped fixtures. In other embodiments, the blade handling assembly comprises three or more blade handling units, preferably distributed along the length or longitudinal axis of the blade. It is preferred that the blade handling assembly does not comprise a crane device.

Each of the blade handling units comprises a motorized trolley, preferably a self-propelled motorized trolley. The term "self-propelled" means herein that the trolley is propelled by other than human power, i.e., a trolley powered by one or more motors, preferably electric motors, such as a DC motor, conveniently receiving electric power from a battery or generator. Thus, in a preferred embodiment, the motorized trolley comprises an electric motor.

It is particularly preferred that the motorized trolley comprises a loading bed or platform, preferably a height-adjustable loading bed or platform. The loading bed or platform preferably has a width of at least 2 meters, preferably at least 2,5 meters. The loading bed or platform preferably has a length of at least 1 meter, preferably at least 1,5 meters. The lifting system of such trolley with height-adjustable loading bed or platform is preferably managed by programmable logic controllers. The lifting system may preferably comprise one or more hydraulic cylinders to effect lowering and lifting of the loading bed or platform. The height difference between the highest position and the lowest position of the height-adjustable loading bed or platform may be 50-300 mm, more preferably 100-250 mm. Each motorized trolley typically comprises a plurality of wheels.

In a particularly preferred embodiment, the motorized trolley is an electrically powered, preferably battery-powered, flatbed trolley. It is also preferred that the motorized trolleys of the blade handling assembly are communicatively connected with each other, preferably by a wireless network. In a preferred embodiment, the motorized trolleys of the blade handling assembly are synchronized with regard to one or more of their speed, acceleration, braking and steering positions of the individual wheels.

Each of the blade handling units comprises an interface structure releasably coupled to the motorized trolley, the interface structure comprising a support member, preferably comprising one or more frames, preferably comprising beams and crossbars, and a receiving member. Preferably, the support member of the interface structure is releasably coupled to the motorized trolley. In an advantageous embodiment, the motorized trolley comprises a loading bed or platform having one or more coupling structures extending from the loading bed or platform, such as one or more rings, attachment eyes or flanges. Said one or more coupling structures extending from the loading bed or platform can be brought into alignment with one or more coupling structures arranged on, or extending from, the support member. One or more coupling devices such as one or more pins, locking pins, bolts or screws can then be inserted through the aligned coupling structure to couple the interface structure to the motorized trolley. In a preferred embodiment, the interface structure is releasably coupled to the motorized trolley using one or more locking pins.

The support member is releasably attached to the receiving member. This is found to enable a particularly flexible solution as a first receiving member can be easily exchanged for a second receiving member of different shape and/or size. In a preferred embodiment, the interface structure is releasably coupled to the motorized trolley using at least one coupling device, such as one or more pins, locking pins, bolts or screws, wherein the support member is releasably attached to the receiving member using at least one attachment device separate from the coupling device. It is thus preferred that the connection between the support member and the motorized trolley is independent from the connection between the support member and the receiving member.

In a preferred embodiment, the support member is releasably attached to the receiving member by using one or more attachment devices, such as a rope, strap or chain. Also, one or more tensionable members, such as a rope, cable or chain, to couple the receiving member to the motorized trolley, e.g., using one or more attachment eyes, rings or hooks arranged on the receiving member and the motorized trolley, respectively. In other embodiments, the support member is releasably attached to the receiving member by using one or more attachment devices, such as one or more pins, locking pins, bolts or screws. In a preferred embodiment a surface of the support member comprising one or more through holes is aligned with a surface of the receiving member comprising one or more through holes. Then, one or more attachment devices such as pins, locking pins, bolts or screws, can be inserted through the aligned through holes to attach the receiving member to the support member.

The support member may also comprise one or more markings provided on its upper surface to guide the correct placement of the receiving member on the support member. The one or more markings are preferably provided by one or more bars or rims fixed to the upper surface of the support member. Preferably, the position of said markings can be changed, thus making the support member adaptable for receiving different types of receiving members. It is preferred that the markings abut the receiving member when the receiving member is attached to the support member.

The receiving member may preferably comprise at least one beam, which preferably extends in a width direction of the receiving member. It is preferred that that the receiving member comprises a mounting assembly, preferably arranged at its upper surface, and preferably attached to the at least one beam, for coupling the fixture to the receiving member. Said mounting assembly may comprise one or more upwardly open slots, preferably U-shaped slots, and preferably one or projections comprising one or more through holes, for pivotably receiving the fixture on the receiving member. In some embodiments, each fixtures comprises two opposed laterally extending cylindrical shafts which can be received in the slots and/or in the through holes of the projections.

A respective fixture is arranged on each receiving member, the fixture being configured for attachment to the wind turbine blade. Different types of fixtures may be used for different blade handling units of the blade handling assembly. Thus, a first type of fixture can be configured to support the blade at its root end, and a second type of fixture can be configured to support the blade at an airfoil region of the blade, preferably at a tip region of the blade, i.e., at a longitudinal distance from the tip of the blade of up to 20 meters, preferably up to 15 meters, going into the direction of the blade root. A first blade handling unit can comprise the first type of fixture, and a second blade handling unit can comprise the second type of fixture. It is particularly preferred that the fixture is pivotably arranged on the receiving member.

In a preferred embodiment, a first type of fixture comprises a root frame, and a first and second root clamping plate each being secured to the root frame, wherein the first and second root clamping plates each comprise a plurality of bolt holes arranged along an arc, preferably a circular arc. This type of fixture can be used to secure a root end of the blade. The root end of the blade, such as the root end surface of the root end, typically comprises bolt attachments distributed along a bolt circle having a bolt circle diameter. Preferably, the respective circular arcs of the root clamping plates have a diameter being the same as the bolt circle diameter. A radius of the circular arc may be the same as a radius of the bolt circle of bolt attachments of the root end. The plurality of bolt holes are advantageously configured for attachment of the root clamping plate to a root end part of the root end, such as a first root end part and/or a second root end part of the root end, for example, such that the longitudinal axis of the wind turbine blade is substantially perpendicular to a plate plane.

In another preferred embodiment, a second type of fixture comprises a tip clamping element and a tip frame, the tip clamping element being attached to the tip frame, wherein the tip clamping element comprises an upper clamping part and a lower clamping part releasably connected for enclosing part of an airfoil region of the wind turbine blade. This type of fixture can be used to secure an airfoil region of the blade, preferably close to the tip end of the blade. For example, the lower clamping part and the upper clamping part may be releasably connected, e.g. by use of a locking pin, bolts or similar, in one side and/or hingedly connected in the opposite side. A clamping part of the tip clamping element may comprise an insert receiver, e.g. configured to receive an insert being formed to accommodate a contour of the blade clamp part. For example, the lower clamping part may comprise a lower insert receiver, e.g. configured to receive a lower insert being formed to accommodate a lower contour of the blade clamp part. Alternatively or additionally, the upper clamping part may comprise an upper insert receiver, e.g. configured to receive an upper insert being formed to accommodate an upper contour of the blade clamp part. Providing a clamping part with an insert receiver may provide that the same clamping part may be used for different wind turbine blades, e.g. having different contours at the blade clamp part. An insert, such as the lower insert and/or the upper insert may be made of a plastic material, such as polyurethane.

It is also preferred that the blade handling assembly further comprises at least two spaced apart support pedestals for supporting the interface structure above a ground surface. Thus, it is preferred that the blade handling assembly comprises at least two support pedestals preferably for receiving the support member of the interface structure for off-loading the interface structure and the fixture from the motorized trolley.

In a preferred embodiment, the two support pedestals are spaced apart on a ground surface by a distance exceeding the width of the platform of the motorized trolley. Preferably, the two support pedestals, or the two of each pair of support pedestals, are spaced apart on a ground surface by a distance extending in the width direction of the support member of the blade assembly. Advantageously, the blade handling assembly comprises a first pair of pedestals and a second pair of pedestals, wherein the first pair of pedestals is configured for supporting the interface structure and the fixture of a first blade handling unit, and wherein the second pair of pedestals is configured for supporting the interface structure and the fixture of a second blade handling unit, wherein all pedestals together additionally support the blade.

The distance between each member of a pair of spaced apart support pedestals may be at least 3 meters such as at least 5 meters. In a preferred embodiment, the platform has a width extending between a first lateral edge and a second lateral edge of the platform, wherein the interface structure is releasably coupled to the motorized trolley such that it extends beyond said first lateral edge and beyond said second lateral edge. When in use, the width of the platform and the width of the support member will generally be substantially perpendicular to the longitudinal axis or length direction of the wind turbine blade, whereas the length of the platform and the length of the support member will generally be substantially parallel to the longitudinal axis or length direction of the wind turbine blade.

Each support pedestal may comprise a lower surface, configured to be placed on a ground surface, and an upper surface, configured receive at least part of the support member. Between the upper and lower surfaces, the support pedestal may comprise one or more vertically extending legs, such as 2-4 vertically extending legs. The support pedestal may be formed or concrete or of steel.

In a preferred embodiment, the support member has a maximum dimension, wherein the interface structure is releasably coupled to the motorized trolley such that the maximum dimension of the support member extends along the width direction of the platform of the trolley, and wherein the maximum dimension has an extent larger than the width of the platform of the trolley. Herein, the maximum dimension of each of the trolley, the support member and the receiving member is denoted the width or width direction of these elements. When the blade is arranged in the blade handling assembly of the present invention, the width or width direction of each of the trolley, the support member and the receiving member, will be generally perpendicular to the length or longitudinal axis of the blade.

In another aspect, the present invention relates to a method of moving a wind turbine blade between two locations, the wind turbine blade having a pressure side, a suction side, a leading edge, and a trailing edge extending between a tip and a root, wherein the method comprises the steps of providing a first blade handling unit and a second blade handling unit, each blade handling unit comprising a motorized trolley, an interface structure releasably coupled to the motorized trolley, the interface structure comprising a support member and a receiving member, the support member being releasably attached to the receiving member, and a fixture arranged on the receiving member, the fixture being configured for attachment to the wind turbine blade, engaging a first part of the wind turbine blade with the fixture of the first blade handling unit, engaging a second part of the wind turbine blade with the fixture of the second blade handling unit, moving the wind turbine blade between the two locations by actuating a motorized drive mechanism of the respective motorized trolleys of the first and second blade handling units.

It is preferred that the first blade handling unit is configured to support the blade at its root end, and that the second blade handling unit is configured to support the blade at an airfoil region of the blade, preferably at the tip end of the blade, i.e., at a longitudinal distance from the tip of the blade of up to 20 meters, preferably up to 15 meters, going into the direction of the blade root.
engaging a first part of the wind turbine blade with the fixture of the first blade handling unit, engaging a second part of the wind turbine blade with the fixture of the second blade handling unit, moving the wind turbine blade between the two locations by actuating a motorized drive mechanism of the respective motorized trolleys of the first and second blade handling units.

In some embodiments the steps of engaging a first part of the wind turbine blade with the first fixture and engaging a second part of the wind turbine blade with the second fixture can be carried out before mounting the fixtures to their respective receiving members of the respective blade handling unit. In other embodiments the steps of engaging a first part of the wind turbine blade with the first fixture and engaging a second part of the wind turbine blade with the second fixture can be carried out after the blade handling unit has been fully assembled.

It is particularly preferred that each motorized trolley comprises a loading bed or platform, preferably a height-adjustable loading bed or platform. In a preferred embodiment, the method further comprises, after moving the wind turbine blade between the two locations, lowering the respective interface structures, the respective fixtures and the blade such that the interface structure engages a plurality of support pedestals, wherein said lowering is performed by lowering the height-adjustable loading bed or platform of each motorized trolley, preferably in a synchronized motion. Thus, the method preferably comprises an off-loading step onto a plurality of support pedestals, preferably two couples of support pedestals, wherein each couple of support pedestals comprises two opposed support pedestals standing on a ground surface, such that the wind turbine blade, as arranged in the respective fixtures mounted to the respective interface structures, is supported above a ground surface. In a preferred embodiment, the motorized trolley of each blade handling unit can then be decoupled from its interface structure, followed by further lowering the height-adjustable loading bed or platform of each motorized trolley, preferably followed by removing each trolley.

In a preferred embodiment, the blade is moved while the blade is supported in a generally horizontal orientation, preferably substantially parallel to a ground surface. The vertical distance between the lowest point of the blade and the ground surface is preferably less than 5 meters, preferably less than 3 meters, when the blade is moved in the blade handling assembly. In a preferred embodiment, the blade is moved in a non-linear direction, i.e., a path including one or more curves and/or turns.

In another aspect, the present invention relates to a blade handling unit as described above.

It will be understood that any of the above-described features or embodiments may apply to each of the different aspects of the present invention, such as to the blade handling assembly and to the method of moving a wind turbine blade between two locations of the present invention. In particular, features and embodiments described with regard to the blade handling assembly may also apply to the method of moving a wind turbine blade between two locations, and vice versa.

As used herein, the term "horizontal" means a plane or an axis that is parallel with respect to the ground. As used herein, the terms "vertical", "downwardly" and "upwardly" refer to directions of movement which is generally perpendicular with respect to the ground. Also, as used herein, the term "maximum dimension" of an object refers to the longest of the width, length, and thickness of said object. For example, if the maximum extension of an object is its width, then the maximum dimension corresponds to the width of said object.

### Detailed description of the invention

The invention is explained in detail below with reference to embodiments shown in the drawings, in which corresponding components are identified by the same reference numerals, wherein
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a schematic side view of a blade handling assembly according to the present invention,
Fig. 6 is a perspective view of a blade handling assembly of the present invention,
Fig. 7 is a perspective view of a support member of a blade handling assembly of the present invention,
Figs. 8-11 are rear views of a blade handling assembly of the present invention illustrating various steps of the method of moving a wind turbine blade between two locations, and
Figs. 12-14 are perspective views of different embodiments of fixtures of a blade handling assembly of the present invention.

### Detailed Description

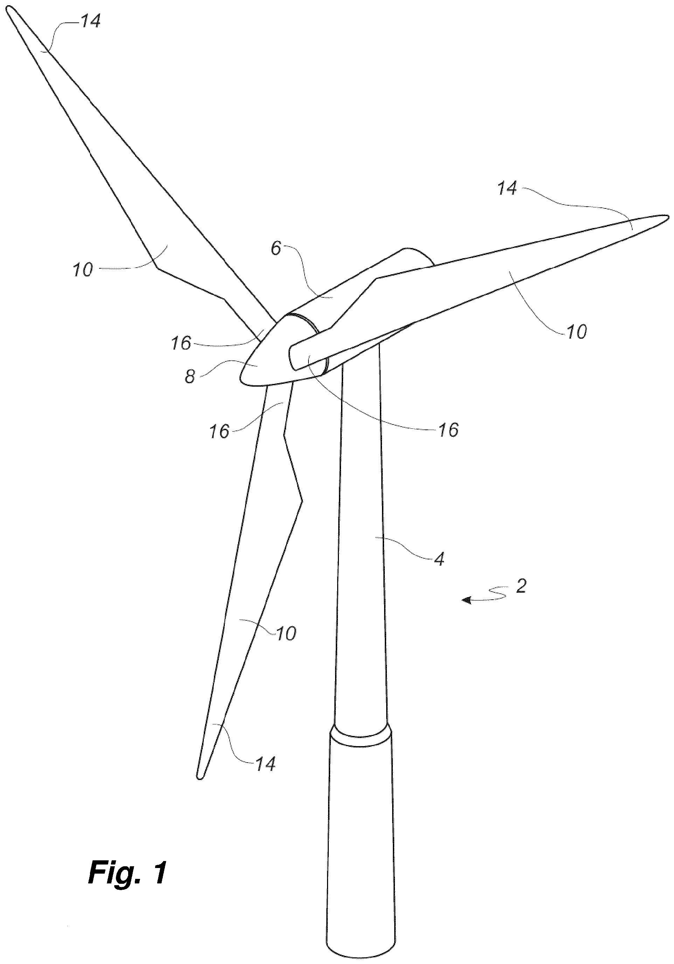

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

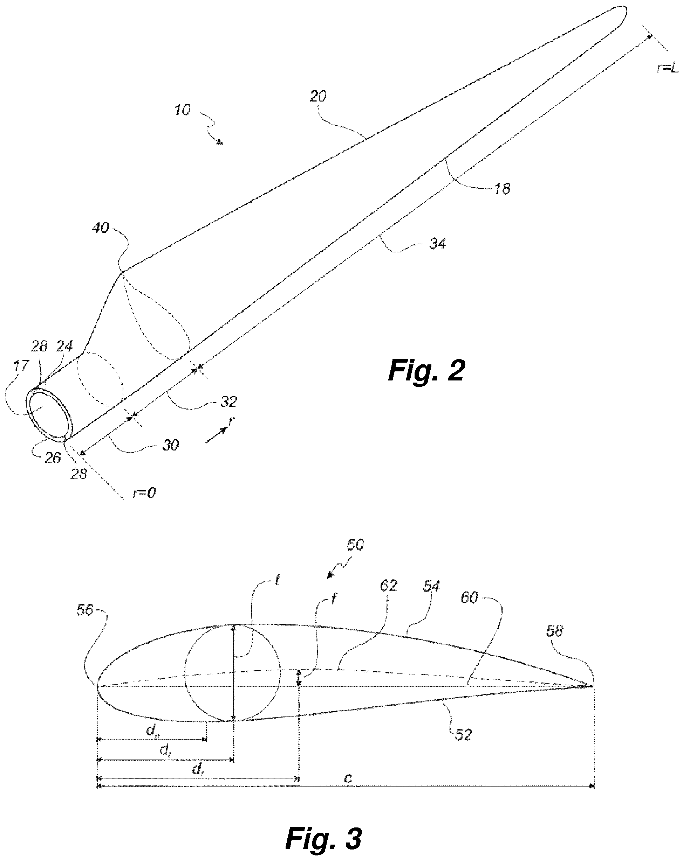

Fig. 2 shows a schematic view of a first embodiment of a wind turbine blade 10. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

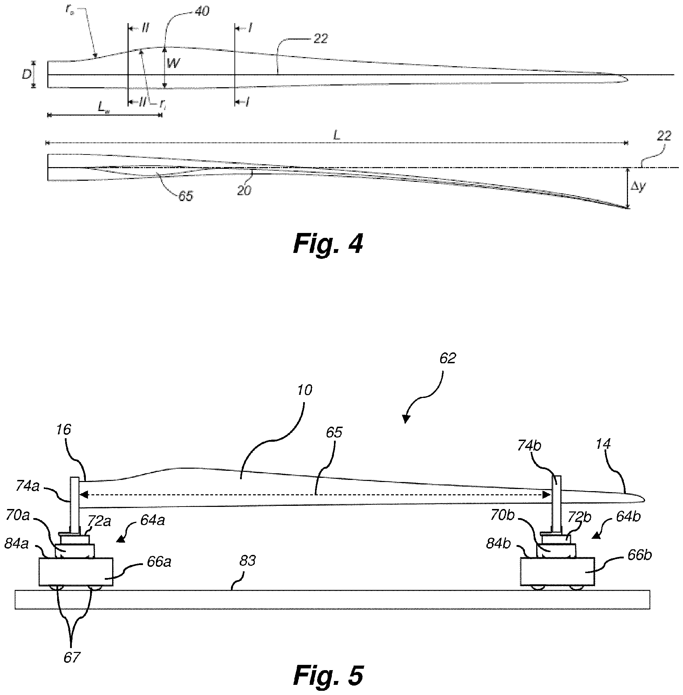

Figs. 3 and 4 depict parameters which are used to explain the geometry of the wind turbine blade. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length *c* extending between a leading edge 56 and a trailing edge 58 of the blade. The airfoil 50 has a thickness *t*, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c*, the maximum camber *f*, the position *d_{f}* of the maximum camber *f*, the maximum airfoil thickness t, which is the largest diameter of the inscribed circles along the median camber line 62, the position *dₜ* of the maximum thickness *t,* and a nose radius (not shown). These parameters are typically defined as ratios to the chord length *c*. Thus, a local relative blade thickness *t*/*c* is given as the ratio between the local maximum thickness *t* and the local chord length c. Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position *r* = 0, and the tip end located at *r* = *L.* The shoulder 40 of the blade is located at a position *r* = *L_{w}*, and has a shoulder width W, which equals the chord length at the shoulder 40. The diameter of the root is defined as *D*. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

Fig. 5 is a schematic side view of a blade handling assembly 62 according to the present invention, with a wind turbine blade 10 supported by the blade handling assembly 62. In the illustrated embodiment, the blade handling assembly 62 includes two blade handling units 64a, 64b, wherein the first blade handling unit 64a is arranged at the root end of the blade, and the second blade handling unit 64b is arranged at a tip region close to the tip end 14 of the blade 10. Each of the blade handling units 64a, 64b comprise a motorized trolley 66a, 66b, and an interface structure 68a, 68b releasably coupled to the respective motorized trolleys 66a, 66b.

The motorized trolleys 66a, 66b are preferably self-propelled trolleys, such as electrically powered, preferably battery-powered, flatbed trolleys. In the illustrated, embodiment, each motorized trolley 66a, 66b comprises a platform 84a, 84b, which is preferably a height-adjustable platform, and a set of wheels 67. It is preferred that the motorized trolleys 66a, 66b are communicatively connected with each other, preferably by a wireless network. The synchronization may be with regard to one or more of their speed, acceleration, braking and steering positions of the individual wheels.

The interface structures 68a, 68b each comprise a support member 70a, 70b and a receiving member 72a, 72b. Each of the support members 70a, 70b is releasably attached to its respective receiving member 72a, 72b.

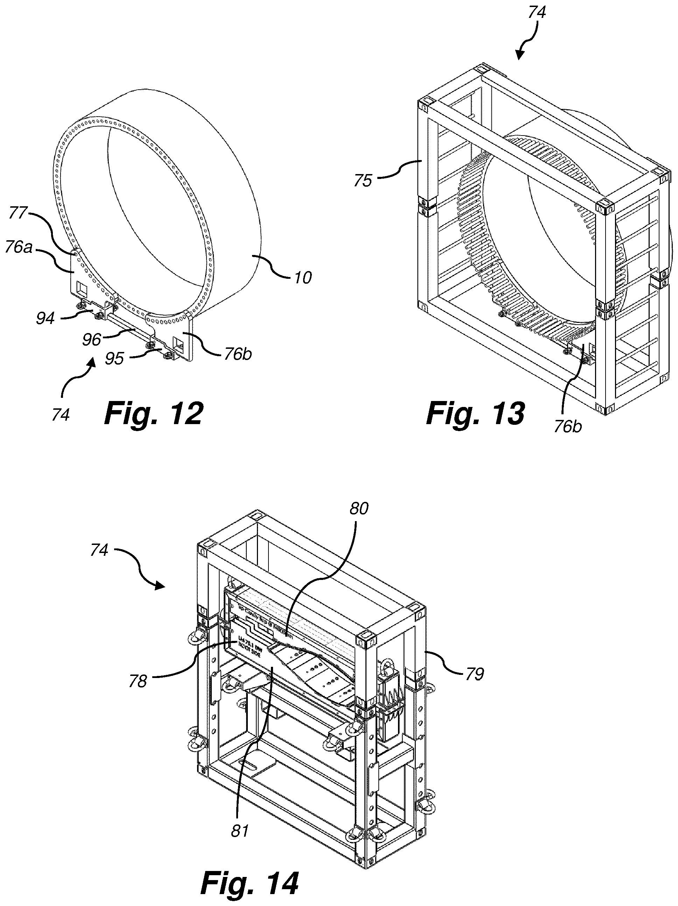

A respective fixture 74a, 74b is arranged on each of the receiving members 72a, 72b. In the illustrated embodiment, the first fixture 74a is a root end fixture, and the second fixture 74b is a tip end fixture. Thus, the fixture 74a is configured for attachment to the root end 16 of the wind turbine blade, and the fixture 74b is configured for attachment to the tip end 14 of the wind turbine blade. For example, the first fixture 74a may be formed as illustrated in Figs. 12 or 13. The second fixture 74b may be formed as shown in Fig. 14.

The distance between the fixture 74a and the fixture 74b, seen along the longitudinal axis of the blade, is indicated by the hatched line 65 in Fig. 5. It is preferred that this distance is 60-90 meters, preferably 65-85 meters, most preferably 70-80 meters.

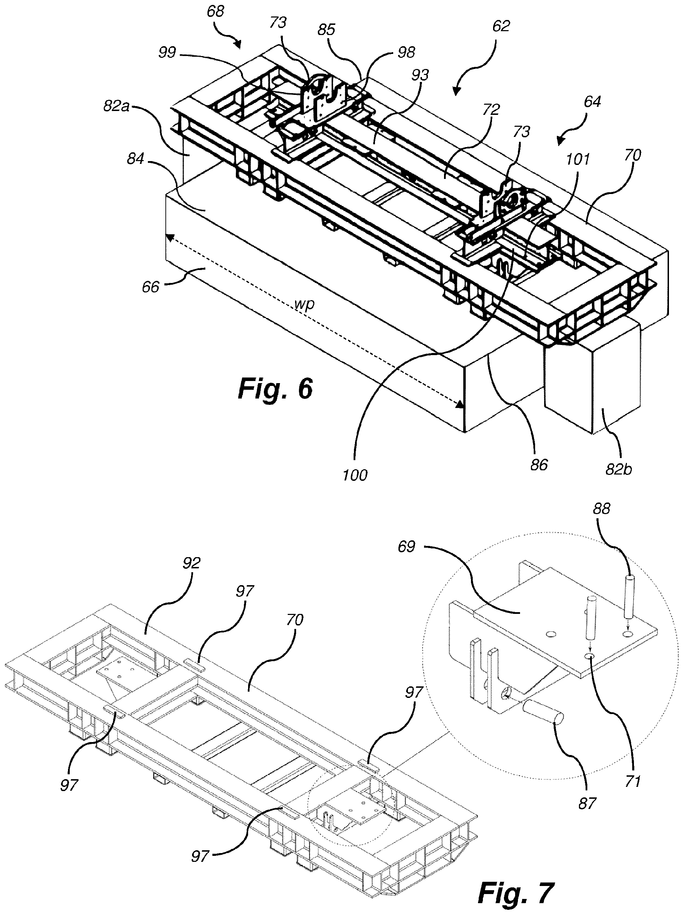

Fig. 6 is a perspective view of a blade handling assembly 62 of the present invention, wherein the fixture is omitted for better visibility of the underlying interface structure 68. The platform 84 of the trolley 66 has a width wp extending between a first lateral edge 85 and a second lateral edge 86 of the platform 84. The support member 70 of the interface structure is releasably coupled to the motorized trolley 66 such that it extends beyond said first lateral edge 85 and beyond said second lateral edge 86. In other words, the maximum dimension of the support member 70 extends along the width direction of the platform 84, wherein said maximum dimension has an extent larger than the width wp of the platform 84.

The receiving member 72 comprises a beam 93 extending in the width direction of the receiving member 72, of the support member 70 and of the trolley 66, when these elements are assembled. A mounting assembly 73 is attached to the beam 93 for coupling the fixture to the receiving member 72. In the illustrated embodiment, the mounting assembly 73 comprises to U-shaped slot 98 and a projection 99 with a through hole on each side for pivotably receiving the fixture on the receiving member 72, e.g., by means of two opposed, laterally extending cylindrical shafts formed on the fixture.

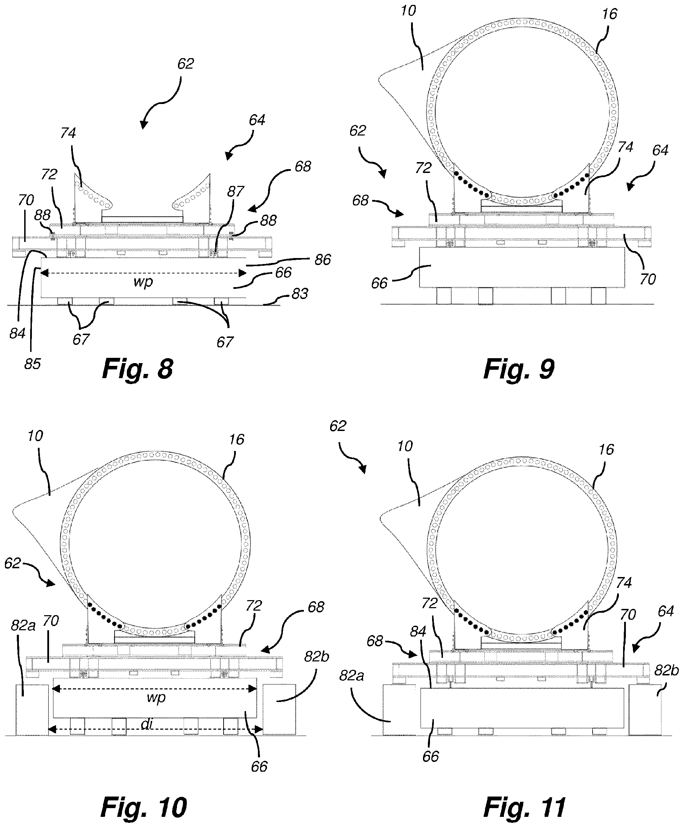

The blade handling assembly 62 further comprises at least two spaced apart support pedestals 82a, 82b for supporting the interface structure 68 above a ground surface, when off-loading the interface structure 68, the fixture and the attached blade from the trolley 66. The pair of support pedestals 82a, 82b are spaced apart on the ground surface 83 by a distance di exceeding the width wp of the platform 84 of the motorized trolley 66, as best seen in Fig. 10.

Fig. 7 is a perspective view of a support member 70 of a blade handling assembly of the present invention. In the illustrated embodiment, the support member 70 comprises a frame 92. The support member 70 also comprises a series of markings 97 on its upper surface to guide the correct placement of the receiving member on the support member 70. The markings 97 can be provided by suitable bar elements or rim elements fixed to the upper surface of the support member, the position of which may be changed, thus making the support member 70 adaptable for receiving different types of receiving members. As illustrated in the enlarged section of Fig. 7, the support member 70 can be releasably coupled to the motorized trolley using at least one coupling device 87, such as one or more pins, bolts or screws. Said pins, bolts or screws may extend both through part of the trolley (not shown) and through part of the support member 70. Thus, the interface structure 68 can be releasably coupled to the motorized trolley 66 using one or more locking pins 87.

Also, the support member 70 can be releasably attached to the receiving member 72 using at least one attachment device 88, such as one or more pins, bolts or screws, separate from the coupling device 87. Said pins, bolts or screws, e.g., attachment devices 88 in Fig. 8, may extend both through part of the receiving member, such as mounting plate 100 with one or more through holes 101 (see Fig. 6), and through part of the support member 70, such as the mounting plate 69 with through holes 71, as illustrated in the enlarged section of Fig. 7. The coupling devices 87 and the attachment devices 88 are also illustrated in Fig. 8.

Figs. 8-11 are rear views of a blade handling assembly of the present invention illustrating various steps of the method of moving a wind turbine blade between two locations. Again, the interface structure 68 is releasably coupled to the motorized trolley 66 such that it extends beyond said first lateral edge 85 and beyond said second lateral edge 86.

Fig. 8 shows a blade handling unit 64 comprising a motorized trolley 66, an interface structure 68 releasably coupled to the motorized trolley 66, the interface structure 68 comprising a support member 70 and a receiving member 72, the support member 70 being releasably attached to the receiving member 72, and a fixture 74 arranged on the receiving member 72. In the illustrated embodiment, the fixture 74 is configured for attachment to the root end of the wind turbine blade, being of the same type as the fixture 74 illustrated in Fig. 12. The blade handling assembly of the embodiment illustrated in Figs. 8-11 also comprises a second blade handling unit arranged closer to the tip of the blade, which is omitted in these drawings for simplicity. Going from Fig. 8 to Fig. 9, a root end of the wind turbine blade 10 is engaged with the fixture 74 of the blade handling unit 64. Also, the as compared to the Fig. 8, the height of the platform 84 has been adjusted upward. A second part of the wind turbine blade closer to the tip end is engaged with the fixture of the second blade handling unit (not shown), and the wind turbine blade is moved between two locations by actuating a motorized drive mechanism of the respective motorized trolleys 66 of the first and second blade handling units 64.

Now referring to Fig. 10, at the destination location, two support pedestals 82a, 82b can be provided. As shown in Fig. 11, the respective interface structures 68, the respective fixtures and the blade can now be lowered for off-loading by lowering the platform of the trolleys such that the interface structure 68 engages the plurality of support pedestals 82. In this position, the trolley 66 can be withdrawn.

Figs. 12-14 are perspective views of different embodiments of fixtures of a blade handling assembly of the present invention. In the embodiment shown in Fig. 12, the fixture 74 comprises first and second root clamping plates 76a, 76b, wherein the first and second root clamping plates 76 each comprise a plurality of bolt holes 77 arranged along an arc. The root clamping plates are interconnected by a first receiver 94, a second receiver 95 and a connector 96 extending between the receivers 94, 95.

In the embodiment shown in Fig. 13, the fixture 74 comprises a root frame 75, to which the first and second root clamping plates 76a, 76b are secured. The circular arc has a diameter being the same as the bolt circle diameter of the root end of the blade 10. Thus, the plurality of bolt holes is configured for attachment of the fixture to a root end of the blade, e.g., by inserting a plurality of pins, bolts or screws extending from the root end of the blade through the bolts holes of the fixture 74, as illustrated in Fig. 13.

In the embodiment illustrated in Fig. 14, the fixture 74 is adapted to receive an airfoil region of the wind turbined blade, preferably close to the tip of the blade. The fixture 74 comprises a tip clamping element 78 and a tip frame 79, the tip clamping element 78 being attached to the tip frame 79. The tip clamping element 78 comprises an upper clamping part 80 and a lower clamping part 81 releasably connected for enclosing part of an airfoil region of the wind turbine blade.

The invention is not limited to the embodiments described herein and may be modified or adapted without departing from the scope of the present invention.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: blade handling assembly
- 64: blade handling unit
- 65: longitudinal distance between fixtures
- 66: motorized trolley
- 67: wheels
- 68: interface structure
- 69: mounting plate
- 70: support member
- 71: though holes
- 72: receiving member
- 73: mounting assembly
- 74: fixture
- 75: root frame
- 76: root clamping plate
- 77: bolt holes
- 78: tip clamping element
- 79: tip frame
- 80: upper clamping part
- 81: lower clamping part
- 82: support pedestals
- 83: ground surface
- 84: platform
- 85: first lateral edge
- 86: second lateral edge
- 87: coupling device
- 88: attachment device
- 89: pins
- 90: bracket
- 91: through holes in bracket
- 92: frame of support member
- 93: beam
- 94: first receiver
- 95: second receiver
- 96: connector
- 97: markings
- 98: U-shaped slot
- 99: projection with through hole
- 100: mounting plate
- 101: through holes
- c: chord length
- di: distance between support pedestals
- *dₜ*: position of maximum thickness
- *d_{f}*: position of maximum camber
- *dₚ*: position of maximum pressure side camber
- *f*: camber
- *L*: blade length
- *r*: local radius, radial distance from blade root
- *t*: thickness
- *wp*: width of the platform
- Δ*y*: prebend

## Claims

1. A blade handling assembly (62) for moving a wind turbine blade (10) between two locations, the wind turbine blade (10) having a pressure side, a suction side, a leading edge, and a trailing edge extending between a tip and a root, the blade handling assembly (62) including at least one blade handling unit (64) comprising:
a motorized trolley (66),
an interface structure (68) releasably coupled to the motorized trolley (66), the interface structure (68) comprising a support member (70) and a receiving member (72), the support member (70) being releasably attached to the receiving member (72),
a fixture (74) arranged on the receiving member (72), the fixture (74) being configured for attachment to the wind turbine blade.

2. A blade handling assembly (62) according to claim 1, wherein the interface structure (68) is releasably coupled to the motorized trolley (66) using at least one coupling device (87), and wherein the support member (70) is releasably attached to the receiving member (72) using at least one attachment device (88) separate from the coupling device (87).

3. A blade handling assembly (62) according to claims 1 or 2, wherein the support member (70) is releasably attached to the receiving member (72) by using one or more attachment devices (88), such as a rope, strap or chain.

4. A blade handling assembly (62) according to any of the preceding claims, wherein the interface structure (68) is releasably coupled to the motorized trolley (66) using one or more locking pins (89).

5. A blade handling assembly (62) according to any of the preceding claims, wherein the motorized trolley (66) is a self-propelled trolley (66).

6. A blade handling assembly (62) according to any of the preceding claims, wherein the motorized trolley (66) comprises a platform (84), preferably a height-adjustable platform (84), wherein the platform (84) has a width extending between a first lateral edge (85) and a second lateral edge (86) of the platform (84), wherein the interface structure (68) is releasably coupled to the motorized trolley (66) such that it extends beyond said first lateral edge (85) and beyond said second lateral edge (86) of the platform (84).

7. A blade handling assembly (62) according to any of the preceding claims, wherein the blade handling assembly (62) further comprises at least two, preferably two pairs of, spaced apart support pedestals (82) for supporting the interface structure (68) above a ground surface (83).

8. A blade handling assembly (62) according to claim 7, wherein the two support pedestals (82) are spaced apart on a ground surface (83) by a distance exceeding the width of the platform (84) of the motorized trolley (66).

9. A blade handling assembly (62) according to any of the preceding claims, wherein the blade handling assembly (62) comprises at least two of said blade handling units (64), preferably with differently shaped fixtures (74).

10. A blade handling assembly (62) according to any of the preceding claims, wherein the fixture (74) comprises a root frame (75), and a first and second root clamping plate (76) each being secured to the root frame (75), wherein the first and second root clamping plates (76) each comprise a plurality of bolt holes (77) arranged along an arc.

11. A blade handling assembly (62) according to any of the preceding claims, wherein the fixture (74) comprises a tip clamping element (78) and a tip frame (79), the tip clamping element (78) being attached to the tip frame (79), wherein the tip clamping element (78) comprises an upper clamping part (80) and a lower clamping part (81) releasably connected for enclosing part of an airfoil region of the wind turbine blade.

12. A method of moving a wind turbine blade between two locations, the wind turbine blade having a pressure side, a suction side, a leading edge, and a trailing edge extending between a tip and a root, wherein the method comprises the steps of
providing a first blade handling unit (64) and a second blade handling unit (64), each blade handling unit (64) comprising a motorized trolley (66), an interface structure (68) releasably coupled to the motorized trolley (66), the interface structure (68) comprising a support member (70) and a receiving member (72), the support member (70) being releasably attached to the receiving member (72), and a fixture (74) arranged on the receiving member (72), the fixture (74) being configured for attachment to the wind turbine blade,
engaging a first part of the wind turbine blade with the fixture (74) of the first blade handling unit (64),
engaging a second part of the wind turbine blade with the fixture (74) of the second blade handling unit (64),
moving the wind turbine blade between the two locations by actuating a motorized drive mechanism of the respective motorized trolleys (66) of the first and second blade handling units (64).

13. A method according to claim 12, wherein the method further comprises, after moving the wind turbine blade between the two locations, lowering the respective interface structures (68), the respective fixtures and the blade such that the interface structure (68) engages a plurality of support pedestals (82), preferably two pairs of support pedestals (82).

14. A method according to claims 12 or 13, wherein the blade is moved in a non-linear direction.

15. A method according to any of claims 12-14, wherein the motorized trolleys are synchronized with regard to one or more of their speed, acceleration, braking and steering positions of their wheels.
